# EUROPÄISCHE PATENTANMELDUNG

(11) **EP 2 336 761 A2**
(43) Veröffentlichungstag der Anmeldung: **22.06.2011**
(21) Anmeldenummer: 10189696.7
(22) Anmeldetag: 02.11.2010
(51) Int. Cl.: G01N 27/406, G01N 33/00

(54) **Verfahren zum Betreiben einer Sonde zur Bestimmung einer Gaszusammensetzung**

(30) Priorität: 01.12.2009 DE 102009047349
(71) Anmelder: Robert Bosch GmbH, 70442 Stuttgart (DE)
(72) Erfinder: Schneider, Jens, 71229 Leonberg (DE); Stanglmeier, Frank, 71735 Eberdingen-Hochdorf (DE); Rosenland, Marc, 74343 Hohenhaslach (DE); Diehl, Lothar, 70839 Gerlingen (DE)

(57) **Zusammenfassung**

Ein Verfahren zum Betreiben einer Sonde zur Bestimmung einer Gaszusammensetzung, insbesondere einer Abgassonde zur Bestimmung der Abgaszusammensetzung im Abgas einer Brennkraftmaschine, wobei die Sonde mittels einer impulsartig betriebenen Heizung auf Betriebstemperatur aufgeheizt wird, ist dadurch gekennzeichnet, dass Heizerschaltimpulse, die eine vorgebbare Charakteristik aufweisen, gezählt werden und aufgrund der Anzahl der Heizerschaltimpulse auf eine Alterung der Sonde geschlossen wird.

## Beschreibung

Die Erfindung betrifft ein Verfahren zum Betreiben einer Sonde zur Bestimmung einer Gaszusammensetzung, insbesondere einer Abgassonde zur Bestimmung der Abgaszusammensetzung im Abgas einer Brennkraftmaschine, wobei die Sonde mittels einer impulsartig betriebenen Heizung auf Betriebstemperatur aufgeheizt wird.

Gegenstand der Erfindung sind auch ein Computerprogramm und ein Computerprogrammprodukt, welche zur Durchführung des Verfahrens geeignet sind.

### Stand der Technik

Sonden zur Erfassung der Abgaszusammensetzung finden beispielsweise als sogenannte Lambdasonden im Abgasbereich von Kraftfahrzeugen Einsatz. Derartige Sauerstoffkonzentrationssonden werden bei einer Betriebstemperatur, die beispielsweise im Bereich von 700 bis 850°C liegt, betrieben. Um diese Temperatur zu erreichen, weisen die Sonden eine Heizung auf, mit deren Hilfe sie auf die Betriebstemperatur aufgeheizt werden.

Solche Sonden gehen beispielsweise aus der Buchveröffentlichung ,,Bosch Kraftfahrtechnisches Taschenbuch, 25. Auflage, 2003", dort Seiten 133, 134, hervor. Diese Sonden werden mit einer leistungsgesteuerten oder temperaturgeregelten Heizung betrieben. Die Heizung kann dabei z.B. im Falle von Fingersonden als separate stäbchenförmige Einheit oder im Falle von Planarsonden als im Sensorelement integrierter Heizer realisiert sein. Die Leistungsaufnahme eines solchen Heizers liegt meist im Bereich von 1 bis 15 Watt, der Kaltwiderstand liegt in einem Bereich von etwa 1 bis 25 Ohm. Die Sondenheizer werden geregelt betrieben. Die Temperaturregelung erfolgt dabei durch Regelung auf einen konstanten Innenwiderstand, vorzugsweise einer Nernstzelle des Sensors. Darüber hinaus ist es auch möglich, auf einen konstanten Heizerwiderstand einzuregeln.

Sowohl bei einem leistungsgesteuerten als auch bei einem temperaturgeregelten Betrieb wird der Heizer der Abgassonde sehr oft ein- und ausgeschaltet. Die Heizer werden impulsartig betrieben. Dabei wird der Heizer bei höherem Luftstrom und bei kälterem Abgas mit einer zunehmenden Pulsweitenschaltdauer länger eingeschaltet und bei geringerem Abgasstrom und heißem Abgas, also bei einer Erwärmung über die Solltemperatur, zeitweise ganz ausgeschaltet. Die Frequenz der Pulsweitenmodulation beträgt vorzugsweise ca. 200 Hz.

Derartige Abgassensoren unterliegen nun einer Alterung über ihre Lebensdauer, die beispielsweise dadurch hervorgerufen wird, dass die Diffusionsbarriere oder Schutzschicht versottet und damit die Empfindlichkeit der Sonde abnimmt. Darüber hinaus nimmt der Innenwiderstand der Nernstzelle im Laufe der Lebensdauer durch Alterung der Elektroden und des Elektrolyten zu. Durch diese Alterungsprozesse verändern sich die Eigenschaften der Sonde nachteilig, was letzten Endes zu einer ungenauen Erfassung der Gaszusammensetzung und damit zu einer ungenauen Regelung der Abgaszusammensetzung beispielsweise bei Brennkraftmaschinen führt. Es ist daher wünschenswert, Verfahren bereitzustellen, mit deren Hilfe Alterungsprozesse derartiger Sonden kompensiert werden können. Eine wesentliche Größe für die Kompensation der Alterung ist die Zeitdauer, während der die Sonde bei extrem heißem Abgas betrieben wurde. Diese Betriebszeit hängt von der speziellen Applikation, d.h. beispielsweise vom Einbauort, vom Rohrdurchmesser, von den geometrischen Verhältnissen der Anströmung und dergleichen und sogar von der Fahrweise des Fahrers des Fahrzeugs ab. Daher kann nicht allein die Betriebszeit ein hinreichendes Kriterium für eine Kompensation der Alterung der Sonde liefern.

Der Erfindung liegt die Aufgabe zugrunde, ein Verfahren bereitzustellen, welches eine Alterung der Sonde zu erkennen ermöglicht und eine Kompensation der Alterung einer derartigen Gassonde, insbesondere einer Lambdasonde, bereitstellt.

### Offenbarung der Erfindung

### Vorteile der Erfindung

Diese Aufgabe wird durch ein Verfahren zum Betreiben einer Sonde der eingangs beschriebenen Art dadurch gelöst, dass Heizerschaltimpulse, die eine vorgebbare Charakteristik aufweisen, gezählt werden und aufgrund der Anzahl der Heizerschaltimpulse auf eine Alterung der Sonde geschlossen wird. Aufgrund dieser Alterung können Kompensationsroutinen gestartet und vorgenommen werden.

Der große Vorteil des Verfahrens liegt darin, dass es beispielsweise als Schaltung oder als Programm als eine einfache Funktionseinheit in einem Sondenstecker oder in einem Steuergerät einer Brennkraftmaschine realisierbar ist. Der schaltungs- bzw. programmtechnische Aufwand ist hierbei gering. Insbesondere dann, wenn das Verfahren als Programm realisiert ist, kann dieses Programm auf einem Computerprogrammprodukt, beispielsweise einem externen Speicher, einer DVD-ROM, einer CD-ROM oder dergleichen gespeichert sein, die von dem Steuergerät einer Brennkraftmaschine eingelesen werden kann. Auf diese Weise ist auch eine Nachrüstung bei bestehenden Fahrzeugen ohne Weiteres möglich.

Durch die in den abhängigen Ansprüchen aufgeführten Maßnahmen sind vorteilhafte Weiterbildungen und Verbesserungen des in dem unabhängigen Anspruch 1 angegebenen Verfahrens möglich.

So sieht eine vorteilhafte Ausgestaltung vor, als vorgebbare Charakteristik der Heizerschaltimpulse die Länge der Heizerschaltimpulse zu verwenden. Die Länge der Impulse ist auf besonders einfache Weise zu erfassen und auszuwerten. Dabei kann vorgesehen sein, dass nur kurze Heizerschaltimpulse kleiner einer vorgebbaren Impulslänge gezählt werden und hieraus auf einen extremen Heißbetrieb der Sonde und aufgrund dieses auf eine Alterung der Elektrode und/oder auf Ablagerungen auf der Sonde geschlossen wird. Kurze Heizerschaltimpulse sind ein Indiz für einen extremen Heißbetrieb der Sonde. Dieser wiederum ist mit der Alterung der Elektroden oder mit Ablagerungen aus einer Heißkorrosion des Abgastraktes verbunden. Beides beeinträchtigt die Funktionsfähigkeit der Sonde.

Bei einer wiederum anderen Ausgestaltung des Verfahrens werden nur lange Heizerschaltimpulse größer einer vorgebbaren Impulslänge gezählt und hieraus auf eine extreme Eigenbeheizung der Sonde durch die Sondenheizung geschlossen. Lange Heizerschaltimpulse sind ein Indiz für eine extreme Eigenbeheizung der Sonde über den eigenen Heizer. Diese wiederum führt zu einer Alterung der Heizung und damit zu einer möglichen Funktionsbeeinträchtigung der Sonde.

Das Zählen der Heizerschaltimpulse kann auf die unterschiedlichste Art und Weise erfolgen. Eine sehr vorteilhafte Ausgestaltung sieht vor, dass die Impulsschwelle der Heizerschaltimpulse auf einen Nullwert, insbesondere einen Nullwert der Heizerspannung und/oder des Heizerstroms bezogen wird.

Eine andere Ausführungsform sieht vor, dass die Schaltimpulse heizleistungsabhängig, insbesondere heizerstromstärkenabhängig erfasst werden. Dabei kann vorgesehen sein, dass nur dann ein Heizerimpuls gezählt wird, wenn ein bestimmter Grenzwert der mittleren Stromstärke überschritten wird.

Hierdurch ist ein Monitoring und eine Korrektur der Alterung des Heizerwiderstands, also eine Korrektur der Widerstandsdrift des Heizers möglich. Diese erfolgt durch Erfassung der Anzahl der Heizerschaltvorgänge und deren Nutzung zur Kompensation der Heizeralterung. Hierzu werden beispielsweise die Heizereinschaltimpulse als indirektes Maß für das Alter des Heizers verwendet und mit dem Alter korrelierende hinterlegte Widerstandskennlinien zur Korrektur ausgewählt.

Es ist hierdurch auch ein Monitoring und eine Korrektur der Alterung der Sensorzelle als Folge von Alterungsdrift der Diffusionsbarriere bzw. einer Innenwiderstandsalterung möglich. Hierbei erfolgt eine Erfassung der Anzahl der Heizereinschaltimpulse und eine Nutzung dieser Information zur Kompensation der Sondenalterung durch Auswählen von hinterlegten, dem Alter zugeordneten Sondenkennlinien.

Es ist sogar möglich, Regenerationsintervalle von Katalysatoren auszulösen. Auch hierfür wird die Anzahl der Schaltimpulse eines stromabwärts des Katalysators angeordneten Sondenheizers als Maß bzw. als zusätzliche Plausibilisierungsgröße zur Festlegung von Regenerationsintervallen für Speicherkatalysatoren genutzt, indem das Modell für die Katalysator-Beladung durch eine zusätzliche Temperaturinformation gestützt wird.

Möglich ist auch eine gewissermaßen temperaturabhängige Durchführung des Verfahrens. Dabei kann vorgesehen sein, dass zusätzlich zu der Erfassung der Heizerschaltimpulse die Temperatur der Sonde erfasst wird und die Heizerschaltimpulse nur dann gezählt werden, wenn eine vorgebbare Sondentemperatur überschritten wird. Die Temperaturerfassung kann beispielsweise durch eine Widerstandsmessung im Sensorelement erfolgen.

### Kurze Beschreibung der Zeichnungen

Ausführungsbeispiele der Erfindung sind in den Zeichnungen dargestellt und in der nachfolgenden Beschreibung näher erläutert.

Es zeigen:
- Fig. 1: schematisch eine Innenwiderstandsalterung einer Nernstzelle über der Betriebszeit;
- Fig. 2: schematisch eine Widerstandsdrift eines Sensorheizers aufgrund der Betriebsdauer und
- Fig. 3: Schaltimpulse des Sensorheizers über der Zeit und die aufgrund des erfindungsgemäßen Verfahrens gezählten Schaltimpulse.

### Ausführungsformen der Erfindung

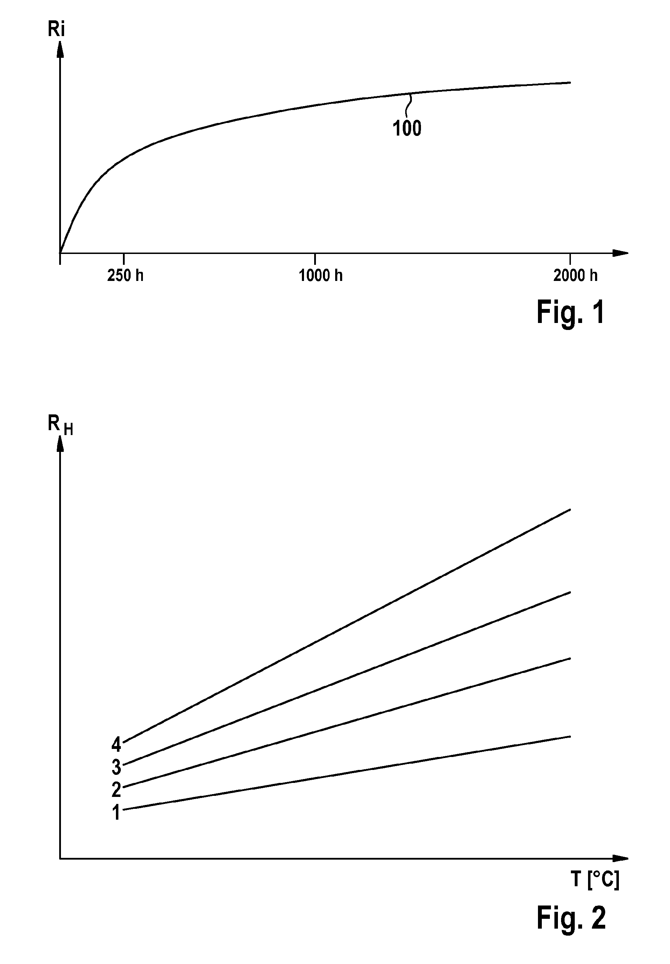

In Fig. 1 ist schematisch der Innenwiderstand Ri einer Nernstzelle über der Betriebsdauer dargestellt. Wie die Fig. 1 zeigt, nimmt der Widerstand mit zunehmender Betriebsdauer zu und nähert sich asymptotisch einem Wert an. Diese Änderung des Innenwiderstands führt zu einer Änderung des Sensorverhaltens und damit zu einer Änderung der Sensorsignale. Die Änderung des Sensorverhaltens sollte für eine präzise Erfassung der Gaszusammensetzung bekannt sein.

In Fig. 2 ist schematisch der Widerstand des Heizers R_{H} über der Temperatur dargestellt. Mit 1, 2, 3 und 4 sind unterschiedliche Betriebsdauern gekennzeichnet. Auch hier ist festzustellen, dass der Innenwiderstand des Heizers abhängig von der Betriebsdauer ein unterschiedliches Temperaturdriftverhalten zeigt. Diese Änderung muss bei einem präzisen Sensorbetrieb bekannt sein und gegebenenfalls eine Kompensationsmöglichkeit bereitgestellt werden.

Gemäß einer ersten Ausgestaltung der Erfindung wird jeder Schaltvorgang registriert und mitgezählt. Auf diese Weise kann eine Betriebsdauer der Heizung erfasst werden. In einer weiteren Ausführungsform wird ein Heizerschaltimpuls nur dann gezählt, wenn ein bestimmter Grenzwert, z.B. ein Grenzwert für eine Stromstärke, der vorgegeben wird, überschritten wird. Auf diese Weise ist es möglich, z.B. nur Kaltstartvorgänge der Sonde (In-rush-current) zu registrieren.

Zum Zählen der Einschaltimpulse ist ein Impulszähler vorgesehen, der alle Einzelimpulse einer Pulsweitenmodulation zählt und damit ein Maß für die gesamte Beheizungszeit gibt. Dies kann ein dem Fachmann an sich bekannter Binärzähler sein.

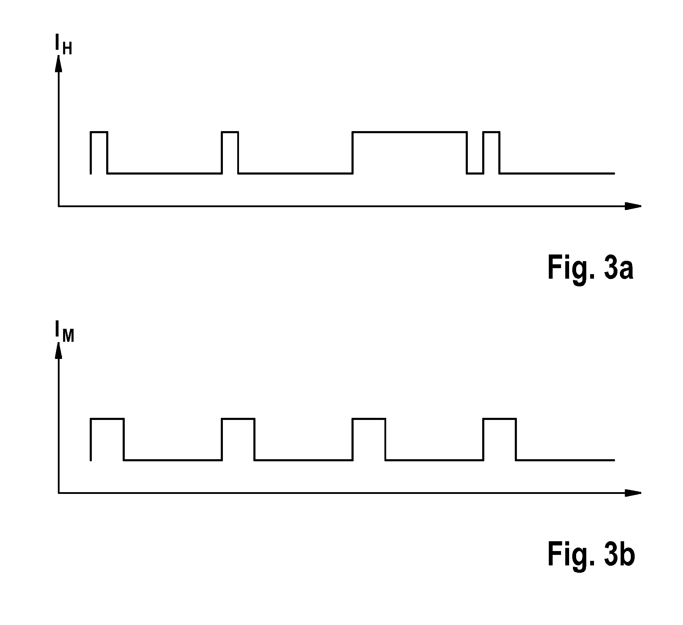

Der Zähler kann eine Impulsformungseinheit aufweisen, die nachfolgend in Verbindung mit Fig. 3 erläutert wird. Er kann so ausgebildet sein, dass er nur kurze bzw. nur sehr lange Impulse zählt. Dazu wird beispielsweise ein Monoflop gestartet, das beim Erreichen eines Zeitendes einen Trigger an einen Zähler gibt, dessen Enableeingang mit dem Originalsignal (bzw. dessen Invertierung) gesteuert wird. Auf diese Weise zählt der Zähler, falls der Hauptimpuls noch anhält bzw. im anderen Fall schon wieder zu Ende ist.

In Fig. 3a sind in der oberen Hälfte die Heizerimpulse I_{H} dargestellt, die in einer an sich bekannten Digitalschaltung als Enable-Signal verwendet werden. In Fig. 3b sind die Signale eines Monoflops dargestellt, die als Clock-Signal verwendet werden. Wenn kurze Heizimpulse I_{M} gezählt werden sollen, triggert das Monoflop (Clock-Signal) den Zähler immer dann, wenn das Enable-Signal bereits wieder abgefallen ist, was bei dem in Fig. 3a dargestellten Signal bei dem ersten, zweiten und vierten Impuls der Fall ist. Kurze Heizerschaltimpulse deuten auf einen extremen Heißbetrieb der Sonde und auf eine sich möglicherweise daraus ergebende Alterung der Elektrode und/oder auf Ablagerungen auf der Sonde hin. Unter Heißbetrieb wird dabei ein Betrieb bei extrem heißem Abgas verstanden.

Wenn dagegen nur lange Heizerschaltimpulse größer einer vorgebbaren Impulslänge gezählt werden sollen, wird das Enable-Signal gewissermaßen invertiert.

Das Monoflop triggert dann nur bei dem dritten Impuls den Zähler, nicht jedoch bei dem ersten, zweiten und vierten Heizerimpuls. Lange Heizerschaltimpulse sind ein Indiz für eine extreme Eigenbeheizung der Sonde durch die Sondenheizung. Eine solche extreme Eigenbeheizung kann zu einer Alterung der Sondenheizung führen.

Ein Zählen von nur kurzen Impulsen kann durch einen Tiefpassfilter realisiert werden. Ein Zählen von langen Heizerschaltimpulsen kann durch einen Hochpassfilter realisiert werden.

Der Zähler kann im Stecker der Sonde realisiert sein und seine Ausgangssignale können über eine digitale Schnittstelle an ein Steuergerät der Brennkraftmaschine weitergegeben werden. Dabei können bei jedem Einschalten der Sonde die Informationen über den Betrieb und die Betriebsdauer der Sonde an das Steuergerät weitergegeben werden. Das Steuergerät kann basierend auf diesen Informationen die Kennlinie an den Sondenzustand anpassen.

Das vorstehend beschriebene Verfahren kann beispielsweise als Computerprogramm auf einem Rechengerät, insbesondere einem Steuergerät einer Brennkraftmaschine implementiert werden und dort ablaufen. Der Programmcode kann auf einem maschinenlesbaren Träger gespeichert sein, den das Steuergerät lesen kann. Auf diese Weise ist auch eine Nachrüstung ohne Weiteres möglich. Selbstverständlich kann auch vorgesehen sein, das Zählen der Heizereinschaltimpulse durch eine entsprechende Schaltung, die beispielsweise im Sondenstecker angeordnet ist, vorzunehmen.

## Patentansprüche

1. Verfahren zum Betreiben einer Sonde zur Bestimmung einer Gaszusammensetzung, insbesondere einer Abgassonde zur Bestimmung der Abgaszusammensetzung im Abgas einer Brennkraftmaschine, wobei die Sonde mittels einer impulsartig betriebenen Heizung auf Betriebstemperatur aufgeheizt wird, **dadurch gekennzeichnet, dass** Heizerschaltimpulse, die eine vorgebbare Charakteristik aufweisen, gezählt werden und aufgrund der Anzahl der Heizerschaltimpulse auf eine Alterung der Sonde geschlossen wird.

2. Verfahren nach Anspruch 1, **dadurch gekennzeichnet, dass** die vorgebbare Charakteristik der Heizerschaltimpulse die Länge der Heizerschaltimpulse ist.

3. Verfahren nach Anspruch 1 oder 2, **dadurch gekennzeichnet, dass** nur kurze Heizerschaltimpulse kleiner einer vorgebbaren Impulslänge gezählt werden und hieraus auf einen extremen Heißbetrieb der Sonde und aufgrund dieses auf eine Alterung einer Sondenelektrode und/oder auf Ablagerungen auf der Sonde geschlossen wird.

4. Verfahren nach Anspruch 1 oder 2, **dadurch gekennzeichnet, dass** nur lange Heizerschaltimpulse größer einer vorgebbaren Impulslänge gezählt werden und hieraus auf eine extreme Eigenbeheizung der Sonde durch die Sondenheizung und aufgrund dieser auf eine Alterung der Sondenheizung geschlossen wird.

5. Verfahren nach einem der vorstehenden Ansprüche, **dadurch gekennzeichnet, dass** die eine Impulsschwelle der Heizerschaltimpulse auf einen Nullwert, insbesondere einen Nullwert der Heizerspannung und/oder des Heizerstroms bezogen werden.

6. Verfahren nach einem der Ansprüche 1 bis 4, **dadurch gekennzeichnet, dass** die Schaltimpulse heizleistungsabhängig, insbesondere heizerstromstärkenabhängig erfasst werden.

7. Verfahren nach Anspruch 6, **dadurch gekennzeichnet, dass** ein Heizerimpuls nur dann gezählt wird, wenn ein bestimmter Grenzwert der Stromstärke überschritten wird.

8. Verfahren nach einem der vorstehenden Ansprüche, **dadurch gekennzeichnet, dass** zusätzlich zu der Erfassung der Heizerschaltimpulse die Temperatur der Sonde erfasst wird und die Heizerschaltimpulse nur dann gezählt werden, wenn eine vorgebbare Sondentemperatur überschritten wird.

9. Computerprogramm, das alle Schritte eines Verfahrens nach einem der Ansprüche 1 bis 8 ausführt, wenn es auf einem Rechengerät, insbesondere dem Steuergerät einer Brennkraftmaschine abläuft.

10. Computerprogrammprodukt mit Programmcode, der auf einem maschinenlesbaren Träger gespeichert ist, zur Durchführung des Verfahrens nach einem der Ansprüche 1 bis 8, wenn das Programm auf einem Computer oder dem Steuergerät eines Fahrzeugs ausgeführt wird.
